# EUROPEAN PATENT APPLICATION

(11) **EP 1 401 026 A1**
(43) Date of publication of application: **24.03.2004**
(21) Application number: 03077347.7
(22) Date of filing: 25.07.2003
(51) Int. Cl.: H01L 31/045, H01L 31/042

(54) **Tile with photovoltaic cells**

(30) Priority: 01.08.2002 IT MI20020386 U
(71) Applicant: King & Miranda Design s.r.l., 20144 Milano (IT)
(72) Inventor: King, Perry, 20144 Milano (IT); Miranda, Santiago, 20144 Milano (IT)
(74) Representative: Mittler, Enrico

(57) **Abstract**

A prefabricated structural element with photovoltaic cells for pavements of urban and extra-urban areas, airport runways, enclosures, sleepers for railway tracks, protection barriers for roads and highways, etc., is described that is made in the form of a tile (1) comprising one or more photovoltaic cells (6) that are connected with each other and with an output terminal.

## Description

The present invention concerns a prefabricated structural element with photovoltaic cells for pavements of urban and extra-urban areas, airport runways, enclosures, sleepers for railway tracks, protection barriers for roads and highways, etc.

The use of photovoltaic cells on the top cover of a building in order to capture sun light and to convert it into electric energy utilisable for the electric system of the same building is already known.

The inevitably limited dimensions of the building limit a lot the practical efficacy and the utilisability of the aforesaid cells.

On the other hand, outside of buildings there are large spaces that are usually left free or in any case utilised occasionally, as roads, parking lots with scarce traffic, airport runways, railway tracks, enclosures and various barriers, and so on.

Scope of the present invention is thus to provide a prefabricated structural element that is usable outside of buildings in order to convert solar energy into electric energy in such a quantity as to be not only utilisable on site but also sellable to the public electric network.

Such scope is attained with a prefabricated structural element in the form of a tile comprising several photovoltaic cells that are electrically connected with each other and with an output terminal.

Such prefabricated structural element can be utilised for pavements of urban and extra-urban scarcely frequented areas (for instance parking lots of sport stadiums), airport runways, enclosures, sleepers for railway tracks, protection barriers for roads and highways, and so on.

An embodiment of the prefabricated element according to the present invention is illustrated as a non-limiting example in the enclosed drawings, in which:

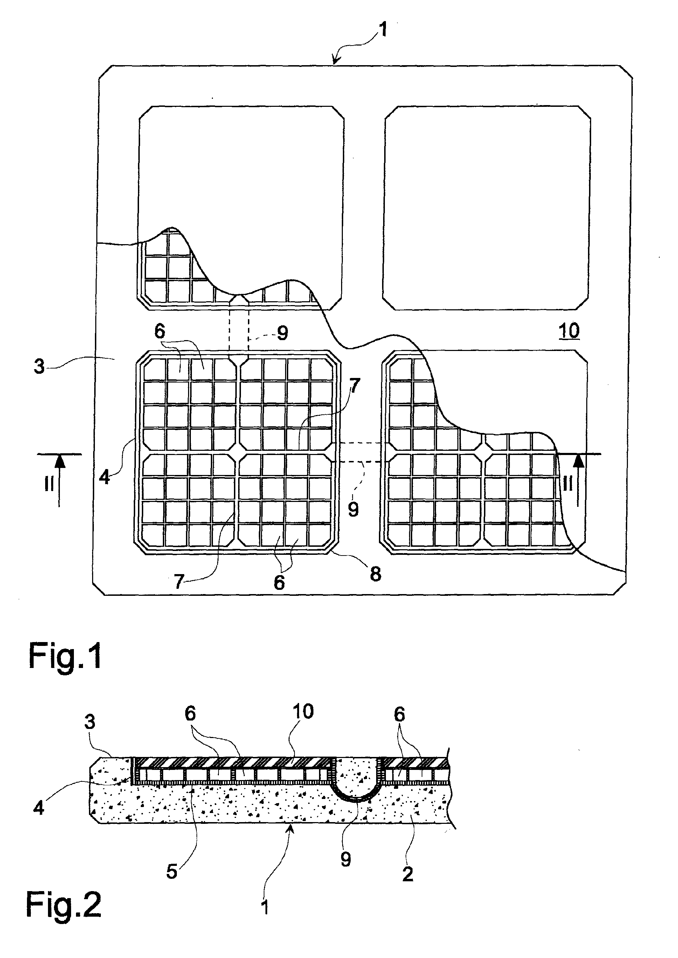

Figure 1 shows a top plan view of a prefabricated structural element for pavement according to the invention;
Figure 2 shows a part of said prefabricated element in section according to line II-II in Figure 1;

The prefabricated structural element shown in the drawings is indicated as a whole by the number 1 and comprises a base layer 2 of cement or similar, on whose top face 3 several niches 4 are obtained, in each one of which a set of photovoltaic cells 6 electrically connected with each other and with internal 7 and external collectors 8 is inserted and secured with rubber cement 5 or similar. Metal jumpers 9 electrically connect with each other and with an output terminal (not shown) the various sets of photovoltaic cells.

A glass layer 10 is positioned as a cover for the various sets of photovoltaic cells of the prefabricated element.

The photovoltaic cells 6 convert the sun light into electric energy, in particular into direct current that is then converted into alternate current, that can be utilised in various ways or it can be sold to the public electric network.

## Claims

1. Prefabricated structural element with photovoltaic cells for pavements of urban and extra-urban areas, airport runways, enclosures, sleepers for railway tracks, protection barriers for roads and highways, etc., **characterised in that** it is made in the form of a tile (1) comprising one or more photovoltaic cells (6) that are connected with each other and with an output terminal.

2. Prefabricated structural element according to claim 1, **characterised in that** said photovoltaic cells (6) are grouped into sets that are inserted and secured into niches (4) of a base layer (2).
